# EUROPEAN PATENT APPLICATION

(11) **EP 1 162 535 A2**
(43) Date of publication of application: **12.12.2001**
(21) Application number: 01000186.5
(22) Date of filing: 24.05.2001
(51) Int. Cl.: G06F 9/38

(54) **Method for executing data operations and assembly for same**

(30) Priority: 24.05.2000 DE 10025612; 02.08.2000 US 630690
(71) Applicant: Texas Instruments Incorporated, Dallas, Texas 75251 (US)
(72) Inventor: Ganz, Rudiger, 85354, Freising (DE); Overhuber, Ralph, 81677, Munchen (DE); Kaiser, Ulrich, 59581, Warstein (DE)
(74) Representative: Holt, Michael

(57) **Abstract**

In a method for executing operations on data stored in a linewise-organized dαta memory (30) in a processor (14), execution is as a function of an enterable operation request. This contains, in addition to the definition of the operation to be executed, also the number of the line in the data memory in which the data to be subjected to the operation are stored. The program instructions necessary for the operation to be executed are stored in an program memory (32). In the method, after having entered the operation request into the buffer, the line number contained is entered into an address select register (42) hard-wired to an address decoder (44) assigned to the data memory, the address decoder (44) thus addressing the line corresponding to the line number. The data contained in the line indicated by the line number in the address select register (42) are shifted into a buffer register (48) assigned to the data memory, and the steps in the program needed for the operation to be executed are then executed on the data in the buffer register.

## Description

The invention relates to a method for executing operations on data stored in a linewise-organized data memory in a processor, it also relating to an assembly for implementing the method.

In executing operations on data stored in a data memory in a processor, the processor, as a rule, sequentially executes a plurality of instructions held in an EEPROM instruction memory. The operations to be executed may consist of, for example, reading data stored in a specific line of the data memory and outputting the data for further application. However, the operation could also consist of writing data entered from without into a desired line of the data memory. In executing such an operation it is usual in response to a corresponding operation request received by the processor to first detect the line number of the data memory contained in this operation request and to branch, as dictated by this line number, to a set of instructions in the instruction memory which then executes the corresponding operations on the data in the corresponding line of the data memory. Each line of the data memory has its own set of instructions in the instruction memory which executes the desired operation. Thus, when the data memory has for example 16 lines the instruction memory then contains 16 instruction sets which "read" the operations for executing the operations in the corresponding line of the data memory. Likewise contained for the other operations to be executed, for example for the "write" operation, are 16 instruction sets assigned to the individual data memory lines.

Depending on the number of lines of the data memory and the number of different operations to be executed a relatively large instruction memory materializes in this kind of executing operations. Since modern processors are produced as integrated circuits, the size of the individual modules on the surface area of the semiconductor chip is an important aspect in designing the circuit and in producing the software needed for operating the processor. In the case as described above the instruction memory becomes so large that achieving it would require an undesirable increase in the surface area of the semiconductor chip. In addition, with increasing size the current consumption of the program memory also increases to values which need to be avoided where possible when the processor is intended for use, for example, having a low current consumption as a prime requirement.

The invention is based on the object of providing a method of the aforementioned kind, by the application of which the size of the program memory of a processor can be considerably reduced without detrimenting or restricting the performance in executing the operations on the data in the data memory.

To achieve this object the subject matter of the invention is a method for executing operations on data stored in a linewise-organized data memory in a processor, as a function of an operation request containing in addition to the definition of the operation to be executed also the number of the line in the data memory in which the data for the operation are stored, the program instructions necessary for the operation to be executed being stored in a program memory, comprising the following steps:
a) entering the line number contained on entry of the operation request into an address select register hard-wired to an address decoder assigned to the data memory, the address decoder thus addressing the line corresponding to the line number,
b) shifting the data contained in the line indicated by the line number in the address select register into a buffer register assigned to the data memory, and
c) executing the program instructions in the program memory needed for the operations to be executed on the data in the buffer register.

In the method in accordance with the invention it is achieved by entering the line number contained in the operation request into the address select register and by its connection to the address decoder assigned to the data memory that all instructions from the program memory subsequently acting on the data memory relate only to the line of the data memory already addressed via the line number. The result of this is that for all lines in the data memory only one set of instructions needs to be contained in the program memory assigned to a specific operation, since the selection of the lines involved in each case has already been defined previously by the cooperation of the address select register with the address decoder. It is in this way that in the program memory only one set of instructions is needed for each type of operation so that it is now no longer necessary to provide a number of identical instruction sets corresponding to the number of lines of the data memory for each type of operation. This results in a considerably reduction in the scope of the program memory so that the disadvantages as described above can be avoided.

The assembly in accordance with the invention for executing the method as described is characterized by the data memory, the temporary memory, the address select register and the buffer register are parts of a RISC processor. Advantageously use is made for the address select register of the register that also already finds application in indirect addressing as the address select register. Preferably this address select register is hard-wired to the address decoder of the data memory so that therein it is always the line addressed that corresponds to the line number stored in the address select register.

The RISC processor in the assembly in accordance with the invention is preferably part of a transponder from which it receives the operation request and the function sequences of which it controls by means of the instructions stored in its program memory.

Preferred and exemplary embodiments of the invention will now be described in greater detail, by way of example only, and with reference to the figures of the accompanying drawings in which:
Fig. 1 is a schematic block diagram of one example application of the method in accordance with the invention and
Fig. 2 is a partial block diagram of the RISC processor as shown in Fig. 1, whereby only the modules are illustrated as needed for explaining the invention.

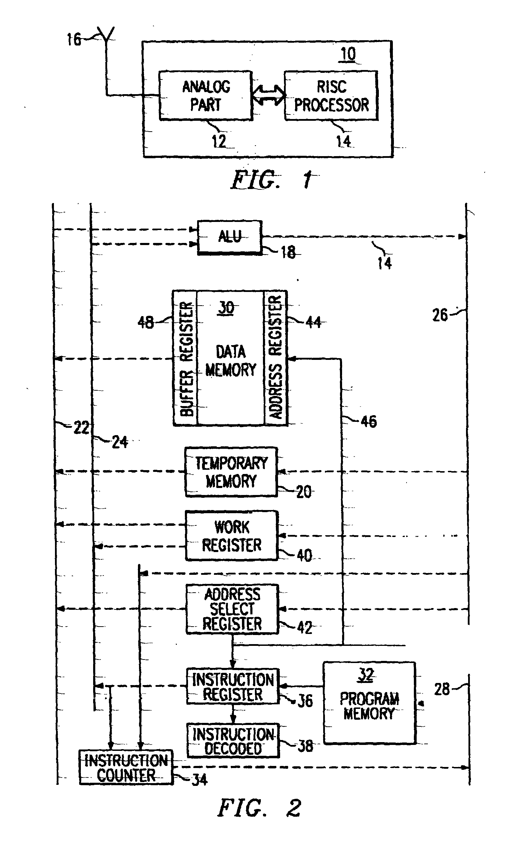

Referring now to Fig. 1 there is illustrated the block diagram for explaining the invention in making use of a transponder 10. This transponder 10 is an electric component containing an analog part 12 and a processor 14 for controlling this analog part. The processor in the example described is a so-called RISC processor, i.e. a processor having a reduced set of instructions.

The transponder 10 receives high-frequency signals via an antenna 16 and in response to these signals which are handled in the analog part 12 it outputs, as controlled by the processor 14, for example, a response signal containing a code group corresponding to a ID number dedicated to the transponder. One example for the application of such a transponder is monitoring access to a security zone. In this application a person carrying the transponder 10 attains access to the security zone only when the transponder 10 responds to receiving an interrogation signal output by a stationary interrogator by sending back the stored ID number and this number is released for unobstructed access to the security zone. However, the processor 14 also controls, for example, writing a desired ID number into a data memory provided therefor, indeed it may also block access to this data memory and in making use of its own security routines release the data memory only under certain conditions and when these conditions are satisfied.

The following description of the method in accordance with the invention applies for the case that the transponder 10 receives via the antenna 16 an operation request intended to read data contained in a specific line in a data memory in the processor 14 and output via the analog part 12 to the antenna. The operation request contains for this purpose in addition to the definition of the operation to be executed, i.e. reading the data, the number of the line in the data memory of the processor 14.

Referring now to Fig. 2 it will now be described how this operation is executed in the processor 14, Fig. 2 illustrating only the modules as needed for understanding the method to be described.

When the transponder 10 receives the operation request it is written with the assistance of the ALU 18 into a temporary memory 20 which is preferably a SRAM-type memory. The transfer of data and signals between individual modules occurs as usual for such a processor via buses 22, 24, 26 and 28 connecting each of the modules in the way as shown in Fig. 2.

The received operation request, stored in the temporary memory 20, contains a code group indicating that a read procedure is to be executed in a data memory 30. The data memory 30 in this case is preferably an EEPROM-type memory as part of the processor 14 and is thus a so-called "embedded" EEPROM. It further contains another code group defining the line of the data memory 30 from which the data is to be read, this being assumed to be line 5 in the example. Entering the operation request into the temporary memory is done conventionally with the aid of instructions in a program memory 32 controlled by a instruction counter 34. As usual the corresponding instructions are first loaded from the program memory 32 into an instruction register 36 and interpreted by a instruction decoder 38 after which the corresponding sequences for busing the data between individual modules are activated. For a better overview the control lines emanating from the instruction decoder 38 have been left out in Fig. 2.

Once entering the operation request into the temporary memory 20 has been concluded the instruction counter 34 in the program memory 32 activates an instruction, resulting in the code group containing the line number being loaded from the temporary memory 20 via the bus 22 and the ALU 18 as well as the bus 26 into a work register 40. After this step the instruction counter 34 activates the next instruction in the program memory 32 so that this activates via the instruction register 36 and the instruction decoder 38 the transfer of the content of the work register 40 into an address select register 42. This address select register 42 is a register as usually included in processors which is additionally made use of for buffering computed program addresses.

As evident from Fig. 2 a hard-wired connection 46 exists between address select register 42 and the address decoder 44 of the data memory 30 with the result that the address decoder 44 always addresses the line in the data memory 30 as dictated by the number in the address select register 42. In the present case it is thus line No. 5 in the data memory 30 that is addressed since the address select register 42 contains this code group defining this line number. On the next instruction from the program memory 32 the content of the addressed line in the data memory 30 is transferred into a buffer register 48 directly assigned to the data memory 30. It is from this buffer register 48 that the data of the line 5 can then be forwarded for further processing in accordance with the desired operation. In the assumed case this further processing involves outputting the data from the buffer register 48 representing the ID number of the transponder via the analog part 12 of the transponder 10 and its antenna 16. The details of this operation are not detailed in the following since use is made of conventional ways and means. Controlling this operation is done by a group of instructions from the program memory 32 to which recourse is made every time one of the lines in the data memory 30 is to be read and its content to be output via the analog part 12 of the transponder 10. Since due to the cooperation of the address select register 42 and the address decoder 44 via the hard-wired connection 46 it is always the desired line that is addressed, use can be made of always the same group of instructions in the program memory 32 for actual further processing of the data in the line involved.

Thus, in preparing access to the data in a specific line in the data memory 30 merely three instructions need to be executed which in application of the programming tier as explained herein can be represented as follows:
MOVA RAM 8,0

This instruction results in the content of the eighth storage location of the SRAM being written into the work register 40 characterized by "0", it being in this storage location that the line number from the operation request is held.

The next instruction is:
MOVWA ASR

This instruction results in the content of the work register being shifted into the address select register.

The next instruction is:
EELOAD

This instruction results in the content of the addressed fifth line of the data memory 30 being transferred into the buffer register 48.

These three instructions are then followed by a group of instructions responsible for further processing of the data in the buffer register 48. As mentioned, however, this group of instructions needs to be present only once for each type of operation to be executed, irrespective of how many lines the data memory 30 has.

The operation to be executed may also consist of writing data received by the transponder 10 into a desired line in the data memory 30. This may be necessary, for example. When the transponder 10 is to receive a specific ID number after manufacture. This number is then output from a programmer in the form of a HF signal, received by the antenna 16 of the transponder 10 and processed by the analog part 12 with the aid of the processor 14 so that writing can be executed first into the buffer register 48 and then into the desired line of the data memory 30.

In further application of the transponder it may then also be desired to execute an operation resulting in blocking access to specific lines in the data memory 30. This operation too, may be executed in accordance with the method as described above, the groups of instructions responsible for actual execution of the desired operation being present once only for application to the desired line in the data memory 30.

Making use of the method as described above permits greatly reducing the size the program memory so that the space needed on a semiconductor chip can be correspondingly reduced, this reduction in size of the program memory 32 also reduces the current consumption since a smaller signal current needs to be applied for signaling the program memory 32 as usual line/column-wise.

## Claims

1. A method for executing operations on data stored in a linewise-organized data memory in a processor, as a function of an operation request containing in addition to the definition of the operation to be executed also the number of the line in the data memory in which the data for the operation are stored, the program instructions necessary for the operation to be executed being stored in a program memory, comprising the following steps:
a) entering said line number contained on entry of said operation request into an address select register (42) hard-wired to an address decoder (44) assigned to said data memory (30), said address decoder (44) thus addressing the line corresponding to said line number,
b) shifting the data contained in the line indicated by said line number in said address select register (42) into a buffer register (48) assigned to said data memory (30), and
c) executing the program instructions needed for said operations to be executed on the data in said buffer register (48) .

2. The method as set forth in claim 1, **characterized in that** said operation request when received is entered into a temporary memory (20).

3. An assembly for implementing the method as set forth in claim 1 or 2, **characterized in that** said data memory (30), said address select register (42) and said buffer register (48) are parts of a RISC processor (14).

4. The assembly as set forth in claim 3, **characterized in that** said address select register (42) is the address select register as used in indirect addressing.

5. The assembly as set forth in claim 3 or 4, **characterized in that** said address select register (42) is hard-wired (46) to said address decoder (44) of said data memory (30) so that therein it is always the line addressed that corresponds to said line number stored in said address select register (42).

6. The assembly as set forth in any of the claims 3 to 5, **characterized in that** said RISC processor (14) is part of a transponder (10) from which it receives said operation request and the function sequences of which it controls by means of the instructions stored in said program memory (32).

7. The assembly as set forth in any of the claims 3 to 6, **characterized in that** said operation request is a read, write or access blocking request as regards a line in said data memory (30).

8. The assembly as set forth in any of the claims 3 to 7, **characterized in that** said data memory (30) is an EEPROM-type memory.

9. The assembly as set forth in any of the claims 3 to 8, **characterized in that** said temporary memory (20) is a SRAM-type memory.

10. The assembly as set forth in claim 9, **characterized in that** said temporary memory (20) is part of said RISC processor (14).
